# EUROPÄISCHE PATENTSCHRIFT

(11) **EP 2 749 705 B1**
(45) Veröffentlichungstag und Bekanntmachung des Hinweises auf die Patenterteilung: **23.05.2018**
(21) Anmeldenummer: 13198748.9
(22) Anmeldetag: 20.12.2013
(51) Int. Cl.: E04C 2/288, E04C 2/32, B32B 5/02, B32B 27/12, B32B 27/30, C04B 28/02, E04B 2/86, C04B 111/00

(54) **Bauplatte**
Building panel
Panneau de construction

(30) Priorität: 28.12.2012 AT 506282012
(43) Veröffentlichungstag der Anmeldung: 02.07.2014
(73) Patentinhaber: Austrotherm GmbH, 7423 Pinkafeld (AT)
(72) Erfinder: Jandl, Johann, 3011 Tullnerbach (AT)
(74) Vertreter: Müllner, Martin

(56) Entgegenhaltungen:
- EP-A1- 1 602 789
- DE-A1- 19 548 381
- DE-A1- 19 848 248
- GB-A- 961 536
- GB-A- 2 086 447
- US-B1- 6 305 135

## Beschreibung

### Technisches Gebiet

Die Erfindung betrifft eine Bauplatte, insbesondere geeignet für die Verwendung als verlorene Schalung, umfassend einen Plattenkörper aus Polystyrol mit einer Mörtelbeschichtung, umfassend ein hydraulisches und/oder polymeres Bindemittel, karbonatische oder silikatische Füllstoffe, karbonatischen oder silikatischen Feinsand und Fließmittel an beiden Plattenseiten, wobei in der Mörtelbeschichtung eine Armierung in Form eines Glasfasergewebes angeordnet ist.

### Stand der Technik

Die Verwendung von Dämmplatten, wie beispielsweise Platten aus Polystyrol als verlorene Schalung ist bekannt. Beispielsweise zeigt die DE 19631800 A raumhohe Polystyrolplatten, die als verlorene Schalung eingesetzt werden. Die Platten weisen keinerlei Armierung auf, sondern werden durch eine Vielzahl von Widerlager-Schienen, die mit Spannstäben fixiert sind, in Position gehalten. Die EP 1602789 A1 zeigt eine Bauplatte aus Polystyrol mit einer armierten Mörtelbeschichtung.

Die GB 1575284 zeigt eine Anordnung, bei der eine Dämmplatte auf beiden Seitenflächen mit einem Mörtelfasergemisch besprüht und anschließend als verlorenes Schalungselement verwendet wird. Die Mörtelschicht dient dabei zur Verstärkung der Dämmplatte und die Fasern dienen als Bewehrung. In der Praxis bedeutet das Beimischen von Kunststofffasern zu einem Mörtel jedoch keine wesentliche Änderung der Werte hinsichtlich der Zugbelastbarkeit. Da die Fasern nicht untereinander vernetzt sind werden die Zugkräfte nicht wie bei einem Gitter durch den Werkstoff des Gitters aufgenommen, sondern verteilen sich über den gesamten Mörtel. Die beigemengten Fasern führen folglich zu keiner Verbesserung hinsichtlich der möglichen Zugbelastungen, die von der Platte aufgenommen werden können.

Die DE 19523908 A zeigt eine verlorene Schalung, welche aus Schalungselementen gebildet ist, die aus mit Mörtelschicht und Armierung versehenen Kunststoffschaumplatten bestehen. Die Mörtelschicht ist mit einem Glasfasergewebe armiert. In der genannten Druckschrift wird die Schalung zur seitlichen Einfassung beim Gießen von Betondecken verwendet. In diesem speziellen Anwendungsfall wirken aufgrund der geringen Gießhöhe nur schwache Kräfte in Richtung der Schalung, weshalb eine entsprechende Polystyrolplatte mit oder auch ohne Beschichtung ausreicht, um den Druck von flüssigem Beton stand zu halten.

Beim Verfüllen ganzer Betonwände entsteht jedoch aufgrund der Höhe der Betonwände, üblicherweise zwischen 2,50 m und 3,20 M, an den unteren Bereichen der Schalung durch den flüssigen Beton ein größerer Druck, wodurch bei der Verwendung von Kunststoffschaumplatten als verlorene Schalung, selbst mit Mörtelbeschichtung und Armierung, Probleme entstehen. Es werden entweder unverhältnismäßig viele Abstützungen benötigt oder die Platten verformen sich oder brechen gar aufgrund des hohen Betondrucks.

### Darstellung der Erfindung

Es ist somit Aufgabe der Erfindung, eine Bauplatte zu schaffen, welche als verlorene Schalung eingesetzt werden kann und nach der Fertigstellung der Betonwand als Wärmedämmung dient, und wobei diese Bauplatte gleichzeitig derart ausgebildet ist, dass sie einem hohen Betondruck beim Verfüllen einer Betonwand standhält und somit effektiv und ohne zusätzlichen Aufwand im Vergleich zu einer normalen Schalung verwendet werden kann.

Diese Aufgabe wird erfindungsgemäß dadurch gelöst, dass die Seitenflächen der Polystyrolplatte, welche die Mörtelbeschichtung tragen, eine Strukturierung in Form von einer Vielzahl über die Polystyrolplatte verteilter Vertiefungen und/oder Erhebungen, bevorzugt in Form von gitterförmig angeordneten Vertiefungen und/oder Erhebungen aufweist, und dass die Bauplatte maximal ein Gewicht von 25 kg/m² und ein Biegemoment von mindestens 10 kNm/m aufweist. Durch die Strukturierung wird ein verbesserter Kontakt zwischen Mörtelbeschichtung und Polystyrolplatte erreicht, wodurch die Bauplatte insgesamt höheren Druckkräften standhält. Durch die Mörtelbeschichtung sowie die darin angeordnete Armierung können auftretende Kräfte bei unterschiedlichen Druckbelastungen entlang der Seitenfläche der Bauplatte effektiv aufgenommen werden, ohne dass es zu einer Verformung oder zum Bruch der Bauplatte kommt.

Da die Beschichtung der Polystyrolplatte zweiseitig ist bietet sie den Vorteil, dass beim Einbau auf der Baustelle nicht auf die richtige Orientierung der Bauplatte geachtet werden muss, da sie symmetrisch aufgebaut ist. Die Bauplatte, insbesondere die Mörtelbeschichtung weist eine Dicke auf, die so gering ist, dass die Bauplatte maximal ein Gewicht von 25 kg/m² hat. Für die Handhabbarkeit der Platten auf der Baustelle ist es sinnvoll, die Platten so dünn und leicht wie möglich auszugestalten. Aufgrund der besonderen Ausgestaltung der erfindungsgemäßen Bauplatten ist es möglich, diese Platten derart dünn auszubilden und sie dennoch als verlorene Schalung einzusetzen. Bei Platten gemäß dem Stand der Technik wären weit höhere Schichtdicken der Mörtelbeschichtung notwendig, um den auftretenden Kräften standzuhalten, wobei die Platten dann Gesamtgewichte von über 100kg/m ² hätten, was in der praktischen Anwendung nicht sinnvoll ist.

Gemäß einem weiteren Merkmal der Erfindung ist es vorgesehen, dass eine ein hydraulisches Bindemittel enthaltende Mörtelbeschichtung 5-12 Masse-%, insbesondere 8-10 Masse-% Feinstzement und 5-15 Masse-%, insbesondere 8-12 Masse-% karbonatischen oder silikatischen Feinstfüllstoff enthält, wobei der Feinstzement und der Feinstfüllstoff einen mittleren Korndurchmesser von 1,5-4 µm, insbesondere von 2-3 µm aufweisen. Durch das Vorsehen einer speziellen Mörtelbeschichtung mit der oben genannten Zusammensetzung wird die Haftung zwischen Mörtelbeschichtung und strukturierter Polystyrolplatte weiter verbessert, wodurch die Scherfestigkeit zwischen Mörtelbeschichtung und Polystyrolplatte sowie die Haftzugefestigkeit der Bauplatte wesentlich erhöht wird.

Ein weiteres Merkmal der Erfindung ist es, dass als Fließmittel in der Mörtelbeschichtung eine Mischung aus einem Polycarboxylatether (PCE) und einem Polyethylenglycol mit einer Molmasse von 1500-6000 g/mol, vorzugsweise von 2500-4000 g/mol, eingesetzt ist, und dass mit Bezug auf die Gesamtrezeptur das PCE mit einem Anteil von 0,05-0,5 Masse-%, bevorzugt von 0,15-0,35 Masse-%, und das Polyethylenglycol mit einem Anteil von 0,05-0,4 Masse-%, bevorzugt von 0,1-0,25 Masse-%, zugesetzt ist. Eine Mörtelbeschichtung enthaltend die angegebenen Bestandteile hat sich nicht nur in ihrer Verbundfestigkeit zum Werkstoff der Polystyrolplatten als besonders herausragend herausgestellt sondern auch in ihrem Schwindverhalten. Das deutlich reduzierte Schwindverhalten ermöglicht erst eine industrielle Produktion einer entsprechenden Bauplatte für eine verlorene Schalung, da dadurch bei einseitiger Mörtelbeschichtung eine Verwölbung der Platten vermindert wird. Weiters wird durch diese Rezeptur eine extrem rasche Kurzzeitfestigkeit erreicht, wodurch ebenfalls eine industrielle Herstellung ermöglicht wird, da keine Zwischenlagerungen während der Herstellung notwendig sind.

Es ist ein weiteres Merkmal der Erfindung, dass die gitterförmige Strukturierung der Polystyrolplatte durch in die Polystyrolplatte eingeprägte Vertiefungen und/oder Erhebungen gebildet wird, wobei die Vertiefungen und/oder Erhebungen eine Breite und Tiefe bzw. Höhe von etwa 1-3 mm aufweisen und der Abstand zwischen jeweils zwei parallelen Vertiefungen und/oder Erhebungen etwa 3-6 mm beträgt. Ein entsprechendes Muster, welches beispielsweise aus quadratischen oder rautenförmigen Nuten oder Stegen ausgebildet sein kann, hat sich als besonders vorteilhaft für die Druckresistenz der Bauplatte herausgestellt.

Ferner ist es ein Merkmal der Erfindung, dass die Seitenflächen der Polystyrolplatte, welche die Mörtelbeschichtung tragen, mit im Wesentlichen parallel zur Längsseite der Platte verlaufenden Nuten versehen sind, wobei die Nuten eine Tiefe von ca. 1-5 mm und eine Breite von ca. 3-10 mm aufweisen, und wobei zwei benachbarte Nuten voneinander mindestens 30 mm beabstandet sind. Bei der Verwendung der Bauplatte als verlorene Schalung werden die Platten derart angeordnet, dass die Nuten im Wesentlichen waagrecht verlaufen und die Bauplatte durch die Nutenanordnung eine geringere Durchbiegung beim Einwirken des Betondrucks aufweist.

Ein weiteres Merkmal der Erfindung ist es, dass das Glasfasergewebe ein Gitter mit einer Zugfestigkeit von mindestens 50 kN/m² ist, und dass das Glasfasergewebe hochalkalibeständig ausgerüstet ist. Die hochalkalibeständige Ausrüstung ist notwendig, damit das Glasfasergewebe in der Mörtelbeschichtung seine Zugfestigkeit behält.

Gemäß einem weiteren Merkmal der Erfindung ist es vorgesehen, dass die Polystyrolplatte eine Dicke von ca. 100-200 mm aufweist, und dass die Bauplatte eine Biegesteifigkeit von mindestens 25 kNm², bevorzugt von mindstens 30 kNm² aufweist. Zur Minimierung der Durchbiegung der Bauplatte ist das Produkt aus Elastizitätsmodul und Trägkeitsmoment maßgebend. Dies ergibt die Biegesteifigkeit. Die erforderlichen Werte für die Verwendung als verlorene Schalung werden insbesondere durch das Elastizitätsmodul der Mörtelbeschichtung sowie der Dicke der Polystyrolplatte erreicht. Bei den angegebenen Werten für die Biegesteifigkeit ergibt sich eine praxistaugliche Durchbiegung der verwendeten Bauplatten von maximal ca. 1 cm.

Ferner ist es ein weiteres Merkmal der Erfindung, dass die Bauplatte an den die Mörtelbeschichtung tragenden Seitenflächen angrenzenden Schmalseiten jeweils gegengleiche Nuten und Federn aufweisen. Durch die Nut-Feder Konstruktion ist es möglich die Bauplatten bei der Verwendung als verlorene Schalung einfach und dicht aneinanderzureihen.

Zum Zwecke einer einfachen Herstellung sowie hohen Stabilität ist es ein weiteres Merkmal der Erfindung, dass die Vertiefungen und/oder Erhebungen sowie gegebenenfalls die Nuten jeweils einen dreieckigen, trapezförmigen oder rechteckigen Querschnitt aufweisen.

Schließlich ist es ein Merkmal der Erfindung, dass die Bauplatte eine Wärmeleitfähigkeit von maximal 0,040 W/(m·K) aufweist. Dadurch wird sichergestellt, dass bei der Verwendung als verlorene Schalung die Bauplatte im fertigen Bauwerk eine ausreichend gute Wärmedämmung bietet.

### Kurze Beschreibung der Abbildungen der Zeichnungen

Die Erfindung wird nun anhand der folgenden Zeichnungen näher erläutert, wobei
Fig. 1 einen schematischen Querschnitt durch eine mögliche Ausführungsform einer erfindungsgemäßen Bauplatte zeigt,
Fig. 2 einen schematischen Querschnitt durch eine alternative Ausführungsform einer erfindungsgemäßen Bauplatte zeigt,
Fig. 3 eine Aufsicht auf eine mögliche Ausführungsform einer Strukturierung der Polystyrolplatte zeigt und
Fig. 4 ein Diagramm für einen beispielhaften Schwindverlauf einer gemäß der Erfindung ausgebildeten Mörtelbeschichtung zeigt.

### Weg(e) zur Ausführung der Erfindung

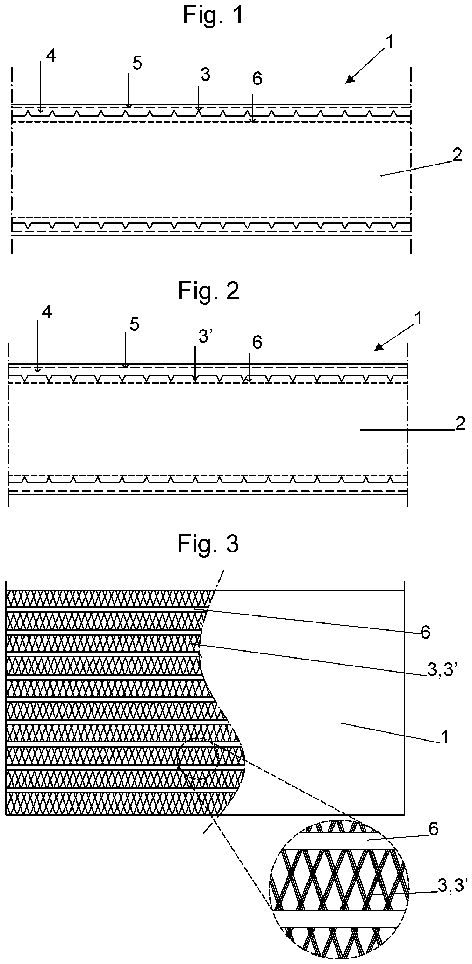

Die in den Figuren 1 und 2 dargestellten Ausführungsformen einer erfindungsgemäßen Bauplatte 1 weist eine Polystyrolplatte 2 als Plattenkörper auf. Die Darstellung der Größenverhältnisse und Schichtdicken ist zur besseren Verständlichkeit stark vergrößert dargestellt und entspricht nicht den tatsächlichen Größenverhältnissen.

Es können sowohl expandierte Polystyrolplatten (EPS) als auch extrudierte Polystyrolplatten (XPS) zum Einsatz kommen. Es muss sich auch nicht um eine über den gesamten Bereich gleichmäßig geschäumte Polystyrolplatte handeln. Beispielsweise können auch Polystyrolplatten verwendet werden, welche in Längsrichtung der Platten verlaufende Langlöcher aufweisen. Auf beiden Seiten ist die Oberfläche der Polystyrolplatte 2 mit einer gitterförmigen Strukturierung in Form von Erhebungen 3 (Fig. 1) oder Vertiefungen 3' (Fig. 2) versehen. Weiters werden Längsnuten 6 in der Oberfläche angeordnet, welche bei der Verwendung der Bauplatte 1 als verlorene Schalung waagrecht verlaufen und der Platte eine erhöhte Stabilität gegenüber Durchbiegung verleihen. Auf diese strukturierten Seitenflächen ist eine Mörtelbeschichtung 4 aufgebracht, in welche beim Aufbringen eine Armierung in Form eines Glasfasergewebes 5 eingelegt wird.

In Fig. 3 ist eine Aufsicht auf eine mögliche gitterförmige Strukturierung auf einer Seitenfläche einer Polystyrolplatte 2 dargestellt. Die Vertiefungen 3 und/oder Erhebungen 3' verlaufen in zwei Richtungen jeweils parallel zueinander, wodurch sich ein rautenförmiges Gitter ergibt. Die Vertiefungen 3 und/oder Erhebungen 3' weisen bevorzugt eine Tiefe bzw. Höhe und Breite von etwa 1-3 mm auf. Der Abstand zwischen zwei benachbarten parallelen Vertiefungen 3 und/oder Erhebungen 3' beträgt etwa 3-6 mm. Unabhängig von der Strukturierung sind parallel verlaufenden Längsnuten 6 angeordnet. Die Längsnuten 6 weisen beispielsweise eine Tiefe von 1-5 mm und eine Breite von 3-10 mm auf. Zwei benachbarte Nuten 6 sind voneinander mindestens 30 mm beabstandet.

Für die Mörtelbeschichtung 4 ist es besonders vorteilhaft einen Mörtel mit der folgenden Rezeptur zu verwenden:
- ) hydraulisches Bindemittel, beispielsweise Portlandzement mit einem Anteil von 30-80 Masse-%, besonders bevorzugt 45-60 Masse-%
- ) karbonatische oder silikatische Füllstoffe mit einem mittleren Korndurchmesser von etwa 10-15 µm mit einem Anteil von 5-15 Masse-%, besonders bevorzugt 8-12 Masse-%
- ) karbonatischen oder silikatischen Feinsand mit einer maximalen Korngröße von etwa 1 mm mit einem Anteil von 10-20 Masse-%, besonders bevorzugt 12-18 Masse-%
- ) Fließmittel auf Basis von Polycarboxylatether (PCE) mit einem Anteil von 0,1-0,5 Masse-%, besonders bevorzugt 0,25-0,4 Masse-%
- ) Feinstzement auf Basis von Portlandzement mit einem mittleren Korndurchmesser von 1,5-4 µm, insbesondere 2-3 µm mit einem Anteil von 5-12 Masse-%, besonders bevorzugt 8-12 Masse-%
- ) karbonatischer oder silikatischer Feinstfüllstoff mit einem mittleren Korndurchmesser von 1,5-4 µm, insbesondere 2-3 µm mit einem Anteil von 5-15 Masse-%, besonders bevorzugt 8-12 Masse-%.

Die jeweiligen Mengen sind so zu wählen, dass sich eine Gesamtmenge von 100 Masse-% ergibt. Um eine verbesserte Haftung der Mörtelschicht und damit eine bessere Scherfestigkeit zwischen Mörtelbeschichtung und Polystyrolplatte sowie bessere Haftzugfestigkeit der Bauplatte zu erreichen sind hauptsächlich die beiden Bestandteile Feinstzement und Feinstfüllstoff ausschlaggebend.

Ein besonders schwindneutrales Verhalten konnte bei Mörtelrezepturen erreicht werden, bei welchen als Fließmittel eine Kombination aus einem speziellen PCE-Fließmittel mit einer kurzen Konsistenzhaltung und einem Polyethylenglycol mit einer Molmasse von 1500-6000 g/mol, bevorzugt von 2500-4000 g/mol, eingesetzt wurde. Dabei stellte sich heraus, dass Einsatzmengen des PCEs von 0,05-0,5 Masse-%, bevorzugt von 0,15-0,35 Masse-%, in Kombination mit einem Polyethylenglycol mit einer Einsatzmenge von 0,05-0,4 Masse-%, bevorzugt von 0,1-0,25 Masse-%, bezogen jeweils auf die Gesamtrezeptur, zu Ergebnissen mit der größten Schwindreduktion führten.

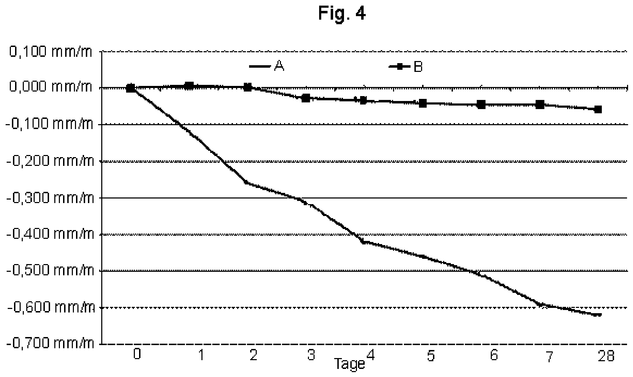

Als charakteristisches Beispiel können für das PCE mit kurzer Konsistenzhaltung das Fließmittel der Fa. BASF mit der Bezeichnung Melflux 2651 F (pulverförmig) und für das Polyethylenglycol eine Type der Fa. Clariant Polyethylenglycol 3000 P (Molekulargewicht 2700-3300 g/mol) verwendet werden. Im Zuge der Durchführung der Untersuchungen konnte ein direkter Zusammenhang zwischen gutem Haftverbund und besonders schwindneutralem Verhalten festgestellt werden. Ein beispielhafter Schwindungsverlauf einer erfindungsgemäßen Mörtelbeschichtung ist in Fig. 4 (mit B bezeichnet) im Vergleich zu einer herkömmlichen Zementrezeptur (mit A bezeichnet) dargestellt. Die Lagerung der Versuchsrezepturen erfolgte bei 20°C und 65% relativer Feuchte. In dem dargestellten Diagramm zeigt die X-Achse die Zeit und die Y-Achse das Schwindverhalten in mm/m aufgetragener Mörtelbeschichtung.

Durch das industrielle Beschichtungsverfahren mit 2-10 Meter/Minute Auftragungsgeschwindigkeit auf einer Seite der Platten würde bei normalem Beschichtungsmörtel das Schwindverhalten so groß sein, dass eine Schüsselung bzw. Verformung der Verbundplatte entstehen würde. Bei Zementen liegt das übliche Schwindverhalten bei 0,1-0,3 mm/m am ersten Tag, bei Mörteln sogar bei 0,5 mm/m. Nach 28 Tagen liegt der Schwindungsverlauf schließlich bei 0,6-2 mm/m. Bei der erfindungsgemäßen Rezeptur vermindert sich das Schwindverhalten auf unter 0,01 mm/m am ersten Tag und ermöglicht die einseitige Beschichtung der 3-4 m langen Platten ohne Deformierungen derselbigen.

Zur Veranschaulichung der verbesserten Druckstabilität der erfindungsgemäßen Bauplatte bei der Verwendung als verlorene Schalung wurden Biegeversuche durchgeführt. Dabei wurde eine Versuchsplatte mit den Abmessungen 1170 mm Länge, 150 mm Breite und 140 mm Dicke über eine Spannweite von 1000 mm angeordnet und danach an einem Punkt in der Mitte der Spannweite eine Druckbelastung aufgebracht bis die Platte brach. Die aufgenommenen Kräfte bis zum Bruch der Platte wurden gemessen und die Ergebnisse sind in Tabelle 1 zusammengefasst.

**Tabelle 1**

| **Beispiel Nr**. | **Aufbau der Bauplatte (beidseitig beschichtet)** | **Durchschnittliche Beschichtung sstärke (mm)** | **Bruchlast (N)** | **Biegebelastung/m Breite** | **Biege-moment (kNm/m)** |
|---|---|---|---|---|---|
| 1 | XPS ohne Strukturierung; Standardmörtel; Glasfasergitter | 6 | 1294,82 | 8,8 kN/m | 2,2 |
| 2 | XPS ohne Strukturierung; Standardmörtel; Glasfasergitter | 6 | 701,51 | 4,7 kN/m | 1,18 |
| 3 | XPS mit gitterförm iger Strukturierung; Standardmörtel; Glasfasergitter | 5 | 2174,35 | 14,7 kN/m | 3,68 |
| 4 | XPS mit gitterförm iger Strukturierung; Standardmörtel; Glasfasergitter | 5 | 2355,12 | 15,7 kN/m | 3,93 |
| 5 | XPS mit gitterförmiger Strukturierung; Spezialmörtel; Glasfasergitter | 7,4 | 9567,57 | 64,0 kN/m | 16 |
| 6 | XPS mit gitterförmiger Strukturierung; Spezialmörtel; Glasfasergitter | 6,2 | 8473,08 | 56,6 kN/m | 14,15 |
| 7 | XPS mit gitterförmiger Strukturierung; Spezialmörtel; Glasfasergitter | 6,1 | 8110,70 | 53,7 kN/m | 13,43 |

Standardmörtel bezeichnet eine dem Fachmann geläufige Mörtelmischung; Spezialmörtel bezeichnet eine Mörtelbeschichtung nach oben angegebener Rezeptur mit den zusätzlichen Bestandteilen Feinstzement sowie Feinstfüllstoff.

Die in der Tabelle 1 angegebenen Werte wurden in einer Testanordnung ermittelt, bei der eine Linienlast (=Punktlast) bei einer Stützweite der verlorenen Schalung von 1 m gemessen wurde. In der Praxis tritt die Belastung an einer verlorenen Schalung jedoch vereinfacht ausgedrückt als Gleichlast auf. Der übliche Betondruck liegt dabei bei etwa 40-50 kN/m ². Das Biegemoment (M) für eine Punktlast (P) errechnet sich M = P x L / 4, wobei L die Länge der Spannweite ist. Für eine Gleichlast (q) beträgt das Biegemoment M = q x L x L / 8. Es ergibt sich also nach Umrechnung q x L = 2P, was bei einer Spannweite von 1 m q = 2P ergibt. Für die Praxis sind also die ermittelten Bruchlasten des Versuchs mit einem Faktor 2 umzurechnen, um die maximale Gleichlast zu ermitteln. Bei Beispiel 1 ergibt dies eine Gleichlast von 17,6 kN/m² und bei Beispiel 5 eine Gleichlast von 128 kN/m².

Laut EN-Norm für statische Dimensionierungen muss ein Sicherheitsfaktor von 2,25 berücksichtigt werden. Das bedeutet, dass bei 40-50 kN/m² Betondruck inklusive dem Sicherheitsfaktor, die Platten je nach Anwendung 90-112,5 kN/m² Gleichlast standhalten müssen. Bei einer Betonwand mit einer Höhe von 2,50-3,20 m Höhe können also erfindungsgemäße Bauplatten gemäß den Beispielen 5-7 eingesetzt werden. Bereits das Vorsehen einer gitterförmigen Strukturierung an der Oberfläche der Polystyrolplatte führt zu einer wesentlich höheren Belastbarkeit der erfindungsgemäßen Bauplatte (Beispiel 3 und 4) gegenüber einer im Stand der Technik bekannten beschichteten Platte mit glatter Oberfläche (Beispiele 1 und 2), was für einige Anwendungen bereits mehr als ausreichend ist. Ein Beispiel wäre hierfür die Verwendung als verlorene Schalung für Kellerdecken oder Decken des obersten Geschosses eines Gebäudes oder auch für Industriedecken. Bei dieser Anwendung ist der auftretende Betondruck geringer als bei dem Verfüllen einer Mauer, jedoch kann durch die erfindungsgemäße Bauplatte mit verbesserten Eigenschaften der Abstand zwischen den Abstützungen zumindest verdoppelt werden, was bei der Errichtung des Gebäudes Zeit und Kosten einspart.

Eine noch deutlich höhere Belastbarkeit ergibt sich bei Verwendung einer Mörtelbeschichtung nach oben angegebener Rezeptur (Beispiele 5-7). Die Druckbelastbarkeit der erfindungsgemäßen Bauplatte liegt bei den Beispielen 5-7 bis zu 7 oder 8 mal höher als bei den im Stand der Technik bekannten Platten gemäß der Beispiele 1 und 2. Dadurch wird es möglich, diese Bauplatten auch als verlorene Schalung bei der Errichtung von Betonwänden mit Höhen von beispielsweise 2,50-3,20 m einzusetzen, da der auftretende Betondruck durch die erfindungsgemäße Bauplatte aufgenommen werden kann.

## Patentansprüche

1. Bauplatte insbesondere geeignet für die Verwendung als verlorene Schalung umfassend einen Plattenkörper aus Polystyrol mit einer Mörtelbeschichtung (4), umfassend ein hydraulisches und/oder polymeres Bindemittel, karbonatische oder silikatische Füllstoffe, karbonatischen oder silikatischen Feinsand und Fließmittel an beiden Plattenseiten, wobei in der Mörtelbeschichtung (4) eine Armierung in Form eines Glasfasergewebes (5) angeordnet ist, **dadurch gekennzeichnet, dass** die Seitenflächen der Polystyrolplatte (2), welche die Mörtelbeschichtung (4) tragen, eine Strukturierung in Form von einer Vielzahl über die Polystyrolplatte (2) verteilter Vertiefungen und/oder Erhebungen (3,3'), bevorzugt in Form von gitterförmig angeordneten Vertiefungen und/oder Erhebungen (3,3') aufweist, und dass die Bauplatte maximal ein Gewicht von 25 kg/m² und ein Biegemoment von mindestens 10 kNm/m aufweist.

2. Bauplatte nach Anspruch 1, **dadurch gekennzeichnet, dass** eine ein hydraulisches Bindemittel enthaltende Mörtelbeschichtung (4) 5-12 Masse-%, insbesondere 8-10 Masse-% Feinstzement und 5-15 Masse-%, insbesondere 8-12 Masse-% karbonatischen oder silikatischen Feinstfüllstoff enthält, wobei der Feinstzement und der Feinstfüllstoff einen mittleren Korndurchmesser von 1,5-4 µm, insbesondere von 2-3 µm aufweisen.

3. Bauplatte nach Anspruch 1 oder 2, **dadurch gekennzeichnet, dass** als Fließmittel in der Mörtelbeschichtung (4) eine Mischung aus einem Polycarboxylatether (PCE) und einem Polyethylenglycol mit einer Molmasse von 1500-6000 g/mol, vorzugsweise von 2500-4000 g/mol, eingesetzt ist, und dass mit Bezug auf die Gesamtrezeptur das PCE mit einem Anteil von 0,05-0,5 Masse-%, bevorzugt von 0,15-0,35 Masse-%, und das Polyethylenglycol mit einem Anteil von 0,05-0,4 Masse-%, bevorzugt von 0,1-0,25 Masse-%, zugesetzt ist.

4. Bauplatte nach einem der Ansprüche 1 bis 3, **dadurch gekennzeichnet, dass** die gitterförmige Strukturierung der Polystyrolplatte (2) durch in die Polystyrolplatte eingeprägte Vertiefungen und/oder Erhebungen (3,3') gebildet wird, wobei die Vertiefungen und/oder Erhebungen (3,3') eine Breite und Tiefe bzw. Höhe von etwa 1-3 mm aufweisen und der Abstand zwischen jeweils zwei parallelen Vertiefungen und/oder Erhebungen (3,3') etwa 3-6 mm beträgt.

5. Bauplatte nach einem der Ansprüche 1 bis 4, **dadurch gekennzeichnet, dass** die Seitenflächen der Polystyrolplatte (2), welche die Mörtelbeschichtung (4) tragen, mit im Wesentlichen parallel zur Längsseite der Platte verlaufenden Nuten (6) versehen sind, wobei die Nuten (6) eine Tiefe von ca. 1-5 mm und eine Breite von ca. 3-10 mm aufweisen, und wobei zwei benachbarte Nuten (6) voneinander mindestens 30 mm beabstandet sind.

6. Bauplatte nach einem der Ansprüche 1 bis 5, **dadurch gekennzeichnet, dass** das Glasfasergewebe (5) ein Gitter mit einer Zugfestigkeit von mindestens 50 kN/m² ist, und dass das Glasfasergewebe (5) hochalkalibeständig ausgerüstet ist.

7. Bauplatte nach einem der Ansprüche 1 bis 6, **dadurch gekennzeichnet, dass** die Polystyrolplatte (2) eine Dicke von ca. 100-200 mm aufweist, und dass die Bauplatte (1) eine Biegefestigkeit von mindestens 25 kNm², bevorzugt von mindestens 30 kNm² aufweist.

8. Bauplatte nach einem der Ansprüche 1 bis 7, **dadurch gekennzeichnet, dass** die Bauplatte (1) an den die Mörtelbeschichtung (4) tragenden Seitenflächen angrenzenden Schmalseiten jeweils gegengleiche Nuten und Federn aufweisen.

9. Bauplatte nach einem der Ansprüche 1 bis 8, **dadurch gekennzeichnet, dass** die Vertiefungen und/oder Erhebungen (3,3') sowie gegebenenfalls die Nuten (6) jeweils einen dreieckigen, trapezförmigen oder rechteckigen Querschnitt aufweisen.

10. Bauplatte nach einem der Ansprüche 1 bis 9, **dadurch gekennzeichnet, dass** die Bauplatte (1) eine Wärmeleitfähigkeit von maximal 0,040 W/(m·K) aufweist.

## Claims

1. A building panel, in particular a panel suitable for use as lost formwork, comprising a panel body made of polystyrene with a mortar coating (4), the mortar coating comprising, on both sides of the panel, a hydraulic and/or polymeric binder, carbonate or silicate fillers, carbonate or silicate fine sand, and plasticizer, a reinforcement in the form of a glass-fibre web (5) being located in the mortar coating (4), **characterised in that** the side surfaces of the polystyrene panel (2), which carry the mortar coating (4), have a structure in the form of a multiplicity of recesses and/or projections (3, 3'), distributed over the polystyrene panel (2), preferably in the form of grid-like-arranged recesses and/or projections (3, 3'), and that the building panel has at a maximum a weight of 25 kg/m² and a bending moment of at least 10 kNm/m.

2. A building panel according to Claim 1, **characterised in that** a mortar coating (4) containing a hydraulic binder, contains 5-12% by weight of ultrafine cement, in particular 8-10% by weight, and 5-15% by weight of carbonate or silicate ultrafine filler, in particular 8-12% by weight, the ultrafine cement and the ultrafine filler having an average grain diameter of 1.5-4 µm, in particular 2-3 µm.

3. A building panel according to Claim 1 or 2, **characterised in that** a mixture of a polycarboxylate (PCE) and a polyethylene glycol with a molecular weight of 1500-6000 g/mol, preferably 2500-4000 g/mol, is used as plasticizer in the mortar coating (4), and that with respect to the total formulation, the PCE is added in a proportion of 0.05-0.5 % by weight, preferably 0.15-0.35 % by weight, and the polyethylene glycol is added in a proportion of 0.05-0.4 % by weight, preferably 0.1-0.25 % by weight.

4. A building panel according to any of Claims 1 to 3, **characterised in that** the grid-like structure of the polystyrene panel (2) is formed by recesses and/or projections (3, 3') impressed onto the polystyrene panel, the recesses and/or projections (3, 3') having a width and depth or height of approximately 1-3 mm, and the spacing between each two parallel recesses and/or projections (3, 3') being approximately 3-6 mm.

5. A building panel according to any of Claims 1 to 4, **characterised in that** the side faces of the polystyrene panel (2) which carry the mortar coating (4) are provided with grooves (6) running substantially parallel to the longitudinal side of the panel, the grooves having a depth of ca. 1-5 mm and a width of ca. 3-10 mm, and two neighbouring grooves (6) being spaced apart from one another by at least 30 mm.

6. A building panel according to any of Claims 1 to 5, **characterised in that** the glass-fibre web (5) is a grid with a tensile strength of at least 50 kN/m² and that the glass-fibre web (5) is treated to be highly alkali resistant.

7. A building panel according to any of Claims 1 to 6, **characterised in that** the polystyrene panel (2) has a thickness of ca. 100-200 mm, and that the building panel (1) has a bending stiffness of at least 25 kNm², preferably at least 30 kNm².

8. A building panel according to any of Claims 1 to 7, **characterised in that** the building panel (1) has, on the narrow sides bordering the side faces carrying the mortar coating (4), in each case grooves and tongues of complementary shape.

9. A building panel according to any of Claims 1 to 8, **characterised in that** the recesses and/or projections (3, 3'), also optionally the grooves (6), have in each case a triangular, trapezoidal, or rectangular cross-section.

10. A building panel according to any of Claims 1 to 9, **characterised in that** the building panel (1) has a thermal conductivity of at a maximum 0.040 W/(m•K).

## Revendications

1. Panneau de construction qui convient à l'utilisation comme moule perdu et qui comprend un corps de panneau en polystyrène lequel est pourvu, sur les deux côtés du panneau, d'un revêtement en mortier (4) comprenant un liant hydraulique et/ou polymère, des charges de type carbonate ou silicate, du sable fin de type carbonate ou silicate et de l'agent d'écoulement, une armature sous forme d'un tissu de fibres de verre (5) étant disposée dans le revêtement en mortier (4), **caractérisé en ce que** les faces latérales du panneau en polystyrène (2), lesquelles supportent le revêtement en mortier (4), présentent une structuration sous forme d'une pluralité de dépressions et/ou de parties surélevées (3, 3') reparties sur le panneau en polystyrène (2), s'agissant préférentiellement de dépressions et/ou parties surélevées (3, 3') disposées sous forme d'une grille, et que le panneau de construction présente un poids de 25 kg/m² au maximum et un moment fléchissant supérieur ou égale à 10 kNm/m.

2. Panneau de construction selon la revendication 1, **caractérisé en ce qu'**un revêtement en mortier (4), lequel contient un liant hydraulique, contient 5 à 12 % en masse, notamment 8 à 10 % en masse, de ciment très fin et 5 à 15 % en masse, notamment 8 à 12 % en masse, de charges très fines de type carbonate ou silicate, le ciment très fin et les charges très fines présentant une granulométrie moyenne comprise entre 1,5 et 4 µm, notamment entre 2 et 3 µm.

3. Panneau de construction selon les revendications 1 ou 2, **caractérisé en ce que** l'on met en oeuvre, en tant qu'agent d'écoulement au sein du revêtement de mortier (4), un mélange constitué d'un éther de polycarboxylate (PCE) et d'un polyéthylèneglycol ayant une masse moléculaire comprise entre 1 500 et 6 000 g/mol, de préférence entre 2 500 et
4 000 g/mol, et que l'ajout du PCE représente une proportion comprise entre 0,05 et 0,5 % en masse, de préférence entre 0,15 et 0,35 % en masse, et l'ajout du polyéthylèneglycol représente une proportion comprise entre 0,05 et 0,4 % en masse, de préférence entre 0,1 et 0,25 % en masse, par rapport à la recette globale.

4. Panneau de construction selon l'une des revendications 1 à 3, **caractérisé en ce que** la structuration en forme d'une grille du panneau en polystyrène (2) est formée par des dépressions et/ou parties surélevées (3, 3') dont le panneau en polystyrène a été pourvu par gaufrage, les dépressions et/ou parties surélevées (3, 3') ayant une largeur et, selon les cas, une profondeur ou hauteur d'environ 1 à 3 mm et l'écart entre deux dépressions et/ou deux parties surélevées (3, 3') étant d'environ 3 à 6 mm.

5. Panneau de construction selon l'une des revendications 1 à 4, **caractérisé en ce que** les faces latérales du panneau en polystyrène (2), lesquelles supportent le revêtement en mortier (4), sont pourvues de rainures (6) s'étendant sensiblement dans un sens parallèle au côté longitudinal dudit panneau, les rainures (6) ayant une profondeur comprise entre env. 1 à 5 mm et une profondeur comprise entre env. 3 à 10 mm, et l'écart entre deux rainures (6) voisines étant supérieur ou égal à 30 mm.

6. Panneau de construction selon l'une des revendications 1 à 5, **caractérisé en ce que** le tissu en fibres de verre (5) correspond à une grille dont la résistance à la traction est supérieure ou égale à 50 kN/m², et que le tissu en fibres de verre (5) est pourvu d'un apprêt lui conférent une haute résistance aux agent alcalins.

7. Panneau de construction selon l'une des revendications 1 à 6, **caractérisé en ce que** le panneau en polystyrène (2) a une épaisseur d'env. 100 à 200 mm, et que le panneau de construction (1) a une rigidité en flexion supérieure ou égale à 25 kNm², de préférence supérieure ou égale à 30 kNm².

8. Panneau de construction selon l'une des revendications 1 à 7, **caractérisé en ce que** le panneau de construction (1) présente, sur les côtés transversaux jouxtant les faces latérales supportant le revêtement en mortier (4), des rainures et des languettes aux formes complémentaires l'une à l'autre.

9. Panneau de construction selon l'une des revendications 1 à 8, **caractérisé en ce que** les dépressions et/ou parties surélevées (3, 3') ainsi que, le cas échéant, les rainures (6) présentent une section triangulaire, trapézoïdale ou rectangulaire.

10. Panneau de construction selon l'une des revendications 1 à 9, **caractérisé en ce que** le panneau de construction (1) a une conductivité thermique inférieure ou égale à 0,040 W/(m·K).
